# EUROPEAN PATENT APPLICATION

(11) **EP 4 014 723 A1**
(43) Date of publication of application: **22.06.2022**
(21) Application number: 20214838.3
(22) Date of filing: 17.12.2020
(51) Int. Cl.: A01J 11/16, A23C 3/02, A23C 3/033, A23C 7/04

(54) **A METHOD AND A SYSTEM FOR PRODUCING A UHT MILK PRODUCT**

(71) Applicant: Tetra Laval Holdings & Finance S.A., 1009 Pully (CH)
(72) Inventor: Malmgren, Bozena, SE-226 53 Lund (SE); Dyck, Burghard, 22927 Grosshansdorf (DE)
(74) Representative: Tetra Pak - Patent Attorneys SE

(57) **Abstract**

The present invention relates to a system (100) and a corresponding method (200) for producing a UHT milk product (MP). The method (200) comprises feeding (225) milk (M) into a first homogenizing device (140), homogenizing (230) the milk (M) by the first homogenizing device (140) at a first temperature and at a first pressure, feeding (235) the milk (M) into a heating device (150), heating (240) the milk (M) by the heating device (150) to a second temperature, the second temperature being higher than the first temperature, feeding (250) the milk (M) into a second homogenizing device (170), and homogenizing (255) the milk (M) by the second homogenizing device (170) at a third temperature and at a second pressure, the third temperature being lower than the second temperature, thereby producing the UHT milk product (MP).

## Description

### Technical Field

The present inventive concept relates to a method and a system for producing a UHT milk product.

### Background Art

Dairy products, e.g. milk, are typically heat treated before being consumed to kill bacterial endospores and thereby increase its shelf life. The two common methods of heat treatment of milk are pasteurization and Ultra-High Temperature (UHT) processes. In pasteurization processes, milk is typically heated to a temperature below 100ºC. Pasteurized milk has a typical shelf life of two weeks and needs to be kept refrigerated while being distributed and stored. In UHT processes, milk is typically heated to a temperature above 135ºC. UHT milk has a typical shelf life of six to nine months if kept unopened and at ambient conditions. Once UHT milk is opened, it needs to be refrigerated and consumed typically within seven days.

However, there is still a need to increase the shelf life of dairy products, particularly when the dairy products need to be stored and/or distributed at ambient condition for a longer time. Therefore, there is a need to provide a method and a system to, at least partly, address the abovementioned limitations.

### Summary

It is an object of the present inventive concept to at least partly overcome one or more of the above-identified limitations of the prior art. It is an object of the present inventive concept to provide a method for producing a UHT milk product which increases a shelf life of the UHT milk product while preserving its stability. Another object of the present inventive concept is to provide a system for producing a UHT milk product having increased shelf life while preserving its stability.

According to a first aspect of the present inventive concept there is provided a method for producing a UHT milk product, the method comprising feeding milk into a first homogenizing device, homogenizing the milk by the first homogenizing device at a first temperature and at a first pressure, feeding the milk into a heating device, heating the milk by the heating device to a second temperature, the second temperature being higher than the first temperature, feeding the milk into a second homogenizing device, and homogenizing the milk by the second homogenizing device at a third temperature and at a second pressure, the third temperature being lower than the second temperature, thereby producing the UHT milk product.

The steps of homogenizing the milk by the first and the second homogenizing devices allow for reducing a size of particles, for example fat globules, in the UHT milk product. The steps of homogenizing hence contribute to increasing shelf life as well as stabilizing the UHT milk product against sedimentation during storage. In addition, the steps of homogenizing the milk improve sensory properties of the UHT milk product such as viscosity, taste and texture.

The step of heating the milk by the heating device to the second temperature, wherein the second temperature being higher than the first and the third temperatures, allows for reducing microorganisms in the milk. Thereby, the step of heating the milk by the heating device to the second temperature allows for forming a UHT milk product. The step of heating the milk by the heating device to the second temperature also contributes to stabilization of the UHT milk product against sedimentation during storage.

The first homogenizing device is arranged upstream the heating device. The second homogenizing device is arranged downstream the heating device. Therefore, such double homogenizing step further improves an emulsion stability of the UHT milk product. In addition, according to experiments carried out by the inventors, the NIZO value (an index obtained by the NIZO method by NIZO Food Research BV used to measure homogenization efficiency) for the produced UHT milk product was determined to be about 98% which is higher than a typical NIZO value of 91% for commercial UHT milk products. Thereby, the present inventive concept allows for increasing the shelf life of the UHT milk product while preserving the emulsion stability of the UHT milk product. Hence, the UHT milk product may be stored and/or distributed at ambient conditions for a longer time, compared to conventionally produced UHT milk products. The inventive concept in turn allows for producing a UHT milk product in a more environmental-friendly manner and with a lower cost by at least reducing the amount of spoiled UHT milk products which are thrown away due to passing their end of shell life.

By "milk" is hereby meant a dairy product such as fresh (raw) milk, pasteurized milk, standardized milk, or recombined milk.

By "UHT milk product" is hereby meant a UHT treated milk product such as UHT-treated semi-skimmed milk, UHT-treated skimmed milk, UHT-treated standardized milk, or UHT-treated whole milk which has a longer shelf life than conventionally produced UHT-treated milk products.

The first temperature and/or the third temperature of the respective first and the second homogenizing device may be in the range of 70 to 95ºC, particularly 80 to 95ºC, more particularly above 80 °C in the stated range. The first pressure and/or the second pressure of the respective first and the second homogenizing device may be in the range of 200 to 800 bar, particularly 400 to 800 bar, more particularly above 400 bar in the stated range. The first and the third temperatures may be selected in relation to the respective first and the second pressure of the first and the second homogenizing device, respectively. This in turn provides flexibility and an improved control of the double homogenizing step i.e. on reducing the size of particles, improving stabilization and sensory properties of the UHT milk product.

The second temperature may be in the range of 135 to 150º C. This may in turn improve the reduction of microorganisms in the UHT milk product. The heating device may be any conventional and commercially available heating device, used in the conventional UHT process. The heating device may heat the milk in a manner which per se is known in the art. The heating device may heat the milk in a direct manner e.g. by steam injection or steam infusion. The heating device may heat the milk in an indirect manner e.g. by a plate-type and/or tubular heat exchanger. The heating device may comprise a plurality of direct and indirect heaters. It may further comprise at least one holding tube to keep the milk at the heated temperature for a defined time like a few seconds known in the art in relation to the temperature value. For instance, at a second temperature of 150º, the milk may be held for a shorter time, compared to a second temperature of 135º C. This in turn provides flexibility and an improved control of the step of heating the milk i.e. an improved control of reducing microorganisms in the UHT milk product.

The method may further comprise, prior to feeding the milk into the first homogenizing device, feeding the milk through a first bactofugation device. The step of feeding the milk through the first bactofugation device may reduce somatic cells in the UHT milk product. The step of feeding the milk to the first bactofugation device may further reduce microorganisms in the UHT milk product. The step of feeding the milk through the first bactofugation device may hence further improve microbiological status by decreasing microbiological load and somatic cell count. Thereby, the step of feeding the milk through the first bactofugation device may also increase the shelf life of the UHT milk product.

The method may further comprise, subsequent to feeding the milk through the first bactofugation device, feeding the milk through a second bactofugation device. The step of feeding the milk through the second bactofugation device may provide the same advantages as the step of feeding the milk through the first bactofugation device. Thereby, such double bactofugation step may further improve microbiological status by decreasing microbiological load and somatic cell count. Thereby, the double bactofugation step may further increase the shelf life of the UHT milk product to up to one year.

The step of heating the milk by the heating device to the second temperature, may comprise heating the milk by an indirect heat exchanger. Thereby, the milk may not come into direct contact with the heat source but may instead be heated by an indirect heat exchanger. Alternatively, or in combination, the step of heating the milk by the heating device to the second temperature, may comprise direct heating of the milk i.e. that the milk may come into direct contact with the heat source.

The method may further comprise, subsequent to the step of heating the milk by the heating device, cooling the milk by a first cooling device from the second temperature to the third temperature. This may in turn facilitate the step of homogenizing the milk by the second homogenizing device at the third temperature.

The method may further comprise, prior to the step of feeding the milk into the first homogenizing device, pre-heating the milk by a pre-heating device to the first temperature. This may in turn facilitates the step of homogenizing the milk by the first homogenizing device at the first temperature. In addition, the step of pre-heating the milk may allow for further reducing microorganisms in the milk. A further pre-heating may be performed before standardization of fresh milk, if the milk fed into the first homogenizing device is a standardized milk. When pre-heating is performed before the standardization, pre-heating temperature may be 45-50º C, particularly 48º C. This part of the invention may also comprise the step of further pre-heating the milk before standardization of fresh milk, if the milk fed into the first bactofugation device is a standardized milk.

The method may further comprise, subsequent to the step of homogenizing the milk by the second homogenizing device, cooling the UHT milk product by a second cooling device to a temperature below 10º C. Thereby, the step of cooling the UHT milk product may bring the UHT milk product into ambient temperature. This may in turn further improve the emulsion stability of the UHT milk product. In addition, this may facilitate storing and/or packaging of the UHT milk product.

The method may further comprise, subsequent to the step of homogenizing the milk by the second homogenizing device, filling the UHT milk product into an aseptic storage and/or aseptic package. Thereby, the UHT milk product may be filled into e.g. sterilized containers under sterile conditions. This in turn facilitates provision of shelf-stable UHT milk products that do not need refrigeration. Thereby, subsequent to the step of filling the UHT milk product into the aseptic storage and/or aseptic package, the UHT milk products may be stored and/or distributed. This part of the invention may also comprise the step of cooling the UHT milk product by a second cooling device to a temperature below 10º C before the step of filling the UHT milk product into an aseptic storage and/or aseptic package.

According to a second aspect of the present inventive concept there is provided a system for producing a UHT milk product. The system comprises a first homogenizing device, configured to homogenize milk at a first temperature and at a first pressure, a heating device, arranged downstream the first homogenizing device, configured to heat the milk to a second temperature, the second temperature being higher than the first temperature, and a second homogenizing device, arranged downstream the heating device, configured to homogenize the milk at a third temperature and at a second pressure, the third temperature being lower than the second temperature. This aspect may generally present the same or corresponding advantages as the former aspect.

The system may further comprise a first bactofugation device, arranged upstream the first homogenizing device. The first bactofugation device may provide the same or corresponding advantages as those mentioned in relation to the first aspect.

The system may further comprise a second bactofugation device, arranged upstream the first homogenizing device and arranged in series with the first bactofugation device. The second bactofugation device may provide the same or corresponding advantages as those mentioned in relation to the first aspect.

If at least one bactofugation device is used, the milk fed to the first bactofugation device may be a dairy product such as fresh (raw) milk, pasteurized milk, standardized milk or recombined milk. If the milk is standardized milk, the pre-heating performed before the standardization as mentioned above may have a temperature 45-50º C, particularly 48º C. At least one bactofugation device may be used after the standardization; or at a cream line of the standardization after separation of the fresh milk; or on a skimmed milk line of the standardization after separation of the fresh milk.

All possible alternatives mentioned before for the first aspect, the method, may also applicable for the second aspect, the system; or vice versa.

Still other objectives, features, aspects and advantages of the present inventive concept will appear from the following detailed description as well as from the drawings.

### Brief Description of the Drawings

Embodiments of the invention will now be described, by way of example, with reference to the accompanying schematic drawings, in which
Fig. 1 is a schematic illustration of a system for producing a UHT milk product.
Fig. 2 is the first part of the steps of a method for producing a UHT milk product.
Fig. 3 is the continued steps of the method of Fig. 2.

### Detailed Description

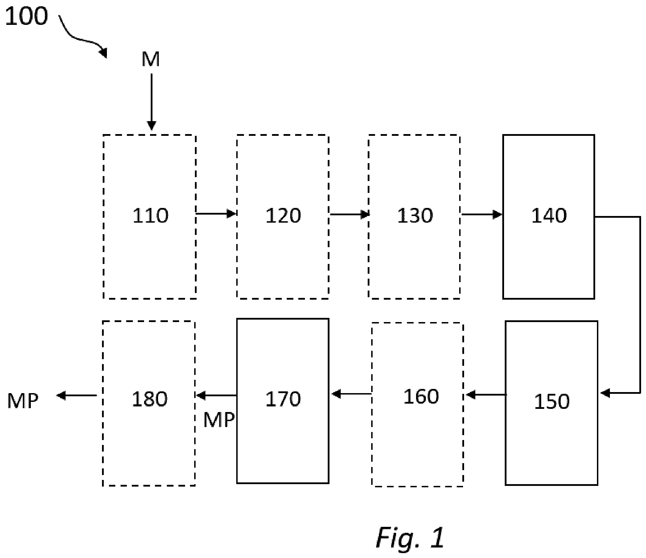

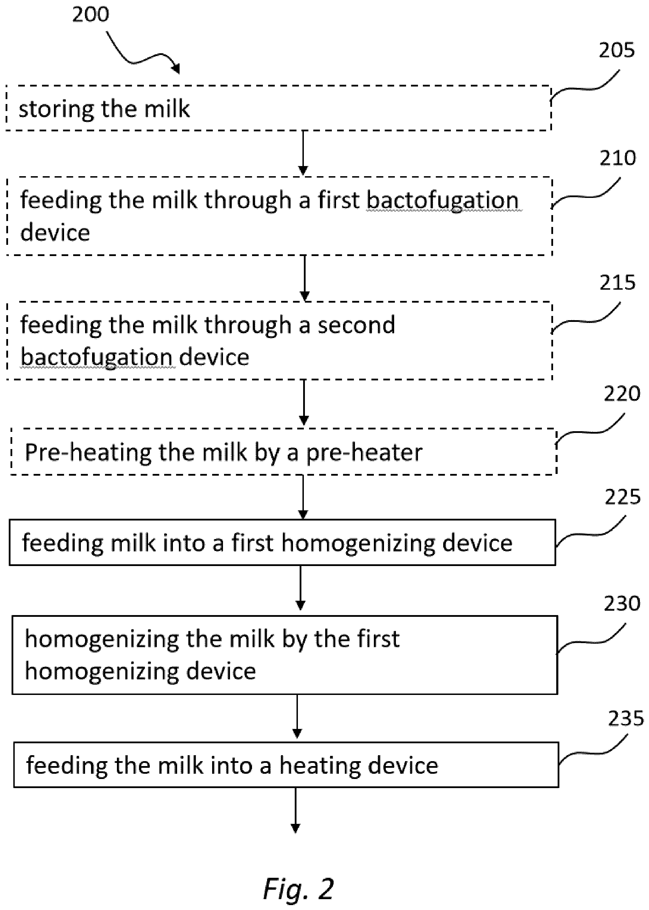

With reference to Fig. 1, a system 100 is illustrated. With reference to Fig. 2-3, a method 200 is illustrated. The system 100 may be used to produce a UHT milk product MP from milk M. In the following, the method 200 and the system 100 in relation to producing the UHT milk product MP from the milk M will be described.

Fig. 1 shows that milk M is fed into the system 100. An example of milk M is raw (fresh) milk, produced at farmer sites. The quality of raw milk depends on its storage conditions such as hygienic standards during storage, storage temperature and storage time. Raw milk should be kept with high hygienic standards prior to being fed into the system 100. In other word, raw milk should be kept with high hygienic standards during the milking, being kept at storage tanks at the farm, and being transported e.g. by tank lorries from the farm to the system 100. The storage time of raw milk may preferably be less than 12 h. In other words, raw milk may preferably be transported and fed into the system 100 within 12 h from milking. The storage temperature of raw milk may preferably be less than 4º C. The storage temperature of the raw milk may more preferably be less than 2º C.

Fig. 1 shows that the system 100 comprises a first bactofugation device 110. Fig. 1 shows that milk M has been fed into the first bactofugation device 110. The bactofugation device 110 may be any conventional and commercially available bactofugation device. The first bactofugation device 110 may process the milk in a manner which per se is known in the art. Fig. 1 further shows that the system 100 further comprises a second bactofugation device 120. The second bactofugation device 120 may be arranged downstream the first bactofugation device 110. The second bactofugation device 120 may be arranged in series with the first bactofugation device 110. The second bactofugation device 120 may process the milk in a manner which per se is known in the art.

Fig. 1 further shows that the system 100 comprises a pre-heating device 130. Fig. 1 shows that the pre-heating device 130 is arranged downstream the first and the second bactofugation device 110, 120. The pre-heating device 130 may pre-heat 220 the milk M to a first temperature. The pre-heating device 130 may be any conventional and commercially available pre-heating device. The pre-heating device 130 may pre-heat the milk M in a manner which per se is known in the art. For instance, the pre-heating device 130 may be a tube type heat exchanger. The tube type heat exchanger may comprise straight and corrugated tubes. The tube type heat exchanger may provide desired performance, long production time and low maintenance costs. Alternatively, the pre-heating device 130 may be a plate type heat exchanger. The pre-heating device 130 may comprise a plurality of heat exchangers of different types. The pre-heating device 130 may pre-heat the milk M to the first temperature in the range of 70 to 95º C, particularly 80 to 95ºC, more particularly above 80 ºC in the stated range.

Fig. 1 further shows that the system 100 comprises a first homogenizing device 140. Fig. 1 shows that the first homogenizing device 140 is arranged downstream the pre-heating device 130. In other words, the pre-heating device 130, first bactofugation device 110 and the second bactofugation device 120 are arranged upstream the first homogenizing device 140. The first homogenizing device 140 may be any conventional and commercially available homogenizing device, used in conventional UHT processes. The first homogenizing device 140 is configured to homogenize 230 milk M at the first temperature. The first temperature may be in the range of 70 to 95º C, particularly 80 to 95ºC, more particularly above 80ºC in the stated range. The first homogenizing device 140 is configured to homogenize 230 milk M at a first pressure. The first pressure may be in the range of 200 to 800 bar, particularly 400 to 800 bar, more particularly above 400 bar in the stated range.

Fig. 1 further shows that the system 100 comprises a heating device 150. Fig. 1 shows that the heating device 150 is arranged downstream the first homogenizing device 140. The heating device 150 is configured to heat 240 the milk M to a second temperature. The heating device 150 may be any conventional and commercially available heating device, used in the conventional UHT process. The heating device 150 may heat 240 the milk M in a manner which per se is known in the art. The heating device 150 may heat the milk M in a direct manner e.g. by steam injection or steam infusion. The heating device 150 may heat the milk M in an indirect manner e.g. by a plate-type and/or tubular heat exchanger. The heating device 150 may comprise a plurality of direct and indirect heaters. The second temperature is higher than the first temperature. The second temperature may be in the range of 135 to 150º C. The heating device 150 may further comprise at least one holding tube to keep the milk at the heated temperature for a defined time like a few seconds known in the art in relation to the temperature value.

Fig. 1 further shows that the system 100 comprises a first cooling device 160. Fig. 1 shows that the first cooling device 160 is arranged downstream the heating device 150. The first cooling device 160 may be any conventional and commercially available cooling device, used in conventional UHT processes. The first cooling device 150 may cool 245 the milk M in a manner which per se is known in the art e.g. by indirect cooling. The first cooling device 150 may lower the temperature of the milk M from the second temperature in the range of 135 to 150º C to a temperature below 95º C.

Fig. 1 further shows that the system 100 comprises a second homogenizing device 170. Fig. 1 shows that the second homogenizing device 170 is arranged downstream the heating device 150. The second homogenizing device 170 may be any conventional and commercially available homogenizing device, used in the conventional UHT process. The second homogenizing device 170 is configured to homogenize 255 the milk M at a third temperature. The third temperature is lower than the second temperature. The third temperature may be in the range of 70 to 95º C, particularly 80 to 95ºC, more particularly above 80 ºC in the stated range. The second homogenizing device 170 is configured to homogenize 255 the milk M at a second pressure. The second pressure may be in the range of 200 to 800 bar, particularly 400 to 800 bar, more particularly above 400 bar in the stated range. At least one of the first or the second pressure may be above 400 bar. For instance, the first pressure may be 300 bar and the second pressure may be 450 bar, or vice versa. Fig. 1 further shows that the UHT milk product MP is produced at an outlet of the second homogenizing device 170.

Fig. 1 further shows that the system 100 comprises a second cooling device 180. Fig. 1 shows that the second cooling device 180 is arranged downstream the second homogenizing device 170. The second cooling device 180 may be any conventional and commercially available cooling device, used in the conventional UHT process. The second cooling device 180 may cool 260 the UHT milk product MP in a manner which per se is known in the art e.g. indirect cooling. The second cooling device 180 may cool 260 the UHT milk product MP to a temperature below 10º C. Subsequent to the cooling 260 of the UHT milk product MP, the UHT milk product MP may be filled 265 into an aseptic storage and/or aseptic package. Such packaged UHT milk product MP may be stored or distributed. A shelf life of the UHT milk product MP may be up to one year. In other words, the UHT milk product MP may be kept unopened and at ambient conditions up to one year.

Fig. 2 illustrates a block scheme of a method 200 for producing a UHT milk product MP. The method 200 may comprise storing 205 milk M e.g. raw milk at a temperature below 4º C, preferably below 2º C. The method 200 may further comprises feeding 210 the milk M through a first bactofugation device 110. The method 200 may further comprises, subsequent to feeding 210 the milk M through the first bactofugation device 110, feeding 215 the milk M through a second bactofugation device 120. The method 200 may further comprise pre-heating 220 the milk M by a pre-heating device 130 to a first temperature. The method 200 further comprises feeding 225 the milk M into a first homogenizing device 140. The step of feeding 225 the milk M into the first homogenizing device 140 may be performed in a manner which per se is known in the art. The steps of feeding 210 the milk M through the first bactofugation device 110, feeding 215 the milk M through the second bactofugation device 120, and pre-heating 220 the milk M by the pre-heating device 130 may be performed prior to the step of feeding 225 the milk M into the first homogenizing device 140.

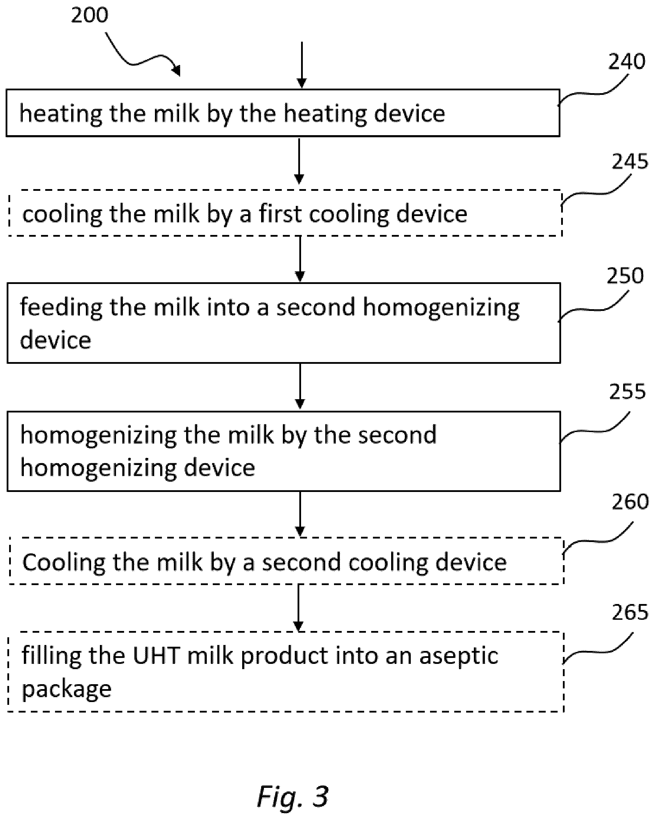

Fig. 2 further shows that the method 200 further comprises homogenizing 230 the milk M by the first homogenizing device 140. The first homogenizing device 140 may be, as described above. The first homogenizing device 140 may homogenize 230 the milk M, as described above. The step of homogenizing 230 the milk M by the first homogenizing device 140 is performed at a first temperature. The first temperature may be in the range of 70 to 95º C, particularly 80 to 95ºC, more particularly above 80 ºC in the stated range. The step of homogenizing 230 the milk M by the first homogenizing device 140 is performed at a first pressure. The first pressure may be in the range of 200 to 800 bar, particularly 400 to 800 bar, more particularly above 400 bar in the stated range. The method 200 further comprises feeding 235 the milk M into a heating device 150. As in Fig. 3, the method 200 further comprises heating 240 the milk M by the heating device 150 to a second temperature. The second temperature may be higher than the first temperature. The second temperature may be in the range of 135 to 150º C. The step of heating 240 the milk M by the heating device 150 to the second temperature, may comprise heating 240 the milk M by an indirect heat exchanger. The method 200 may further comprise subsequent to the step of heating 240 the milk M by the heating device 150, cooling 245 the milk M by a first cooling device 160. The step of cooling 245 the milk M by the first cooling device 160 may cool the milk M from the second temperature to a third temperature. The third temperature may be in the range of 70 to 95º C, particularly 80 to 95ºC, more particularly above 80 ºC in the stated range.

Fig. 3 further shows that the method 200 further comprises feeding 250 the milk M into a second homogenizing device 170. The step of feeding 250 the milk M into the second homogenizing device 170 may be performed in a manner which per se is known in the art. The method 200 further comprises homogenizing 255 the milk M by the second homogenizing device 170. The second homogenizing device 170 may be, as described above. The second homogenizing device 170 may homogenize 255 the milk M, as described above. The step of homogenizing 255 the milk M by the second homogenizing device 170 is performed at the third temperature. The third temperature is lower than the second temperature. The third temperature may be in the range of 70 to 95º C, particularly 80 to 95ºC, more particularly above 80 ºC in the stated range. The step of homogenizing 255 the milk M by the second homogenizing device 170 is performed at a second pressure. The second pressure may be in the range of 200 to 800 bar, particularly 400 to 800 bar, more particularly above 400 bar in the stated range. Thereby, subsequent to the step of homogenizing 255 the milk M by the second homogenizing device 170, a UHT milk product MP is produced.

Still in connection with Fig. 3, the method 200 may further comprise, subsequent to the step of homogenizing 255 the milk M by the second homogenizing device 170, cooling 260 the UHT milk product MP by a second cooling device 180. The step of cooling 260 the UHT milk product MP by the second cooling device 180 may be performed in a manner which per se is known in the art. The step of cooling 260 the UHT milk product MP by the second cooling device 180 may cool 260 the UHT milk product MP to a temperature below 10º C. The method 200 may further comprise adding flavors and/or tastes into the UHT milk product MP. The method 200 may further comprise subsequent to the step of homogenizing 255 the milk M by the second homogenizing device 170, filling 265 the UHT milk product MP into an aseptic storage and/or aseptic package. The step of filling 265 the UHT milk product MP into the aseptic storage and/or aseptic package may be performed subsequent to the step of cooling 260 the UHT milk product MP. The step of filling 265 the UHT milk product MP into the aseptic storage and/or aseptic package may be performed in a manner which per se is known in the art.

From the description above follows that, although various variants of the inventive concept have been described and shown, the inventive concept is not restricted thereto, but may also be embodied in other ways within the scope of the subject-matter defined in the following claims.

## Claims

1. A method (200) for producing a UHT milk product (MP), the method (200) comprising:
feeding (225) milk (M) into a first homogenizing device (140),
homogenizing (230) the milk (M) by the first homogenizing device (140) at a first temperature and at a first pressure,
feeding (235) the milk (M) into a heating device (150),
heating (240) the milk (M) by the heating device (150) to a second temperature, the second temperature being higher than the first temperature,
feeding (250) the milk (M) into a second homogenizing device (170), and
homogenizing (255) the milk (M) by the second homogenizing device (170) at a third temperature and at a second pressure, the third temperature being lower than the second temperature, thereby producing the UHT milk product (MP).

2. The method (200) according to claim 1, wherein the first temperature and/or the third temperature are in the range of 70 to 95º C.

3. The method (200) according to claim 1 or 2, wherein the first pressure and/or the second pressure are in the range of 200 to 800 bar.

4. The method (200) according to any one of the preceding claims, wherein the second temperature is in the range of 135 to 150º C.

5. The method (200) according to any one of the preceding claims, the method (200) further comprising, prior to feeding (225) the milk (M) into the first homogenizing device (140), feeding (210) the milk (M) through a first bactofugation device (110).

6. The method (200) according to claim 5, the method (200) further comprising, subsequent to feeding (210) the milk (M) through the first bactofugation device (110), feeding (215) the milk (M) through a second bactofugation device (120).

7. The method (200) according to any one of the preceding claims, wherein the step of heating (240) the milk (M) by the heating device (150) to the second temperature, comprises heating (240) the milk (M) by an indirect heat exchanger.

8. The method (200) according to any one of the preceding claims, the method (200) further comprising, subsequent to the step of heating (240) the milk (M) by the heating device (150), cooling (245) the milk (M) by a first cooling device (160) from the second temperature to the third temperature.

9. The method (200) according to any one of the preceding claims, the method (200) further comprising, prior to the step of feeding (225) the milk (M) into the first homogenizing device (140), pre-heating (220) the milk (M) by a pre-heating device (130) to the first temperature.

10. The method (200) according to any one of the preceding claims, the method (200) further comprising, subsequent to the step of homogenizing (255) the milk (M) by the second homogenizing device (170), cooling (260) the UHT milk product (MP) by a second cooling device (180) to a temperature below 10º C.

11. The method (200) according to any one of the preceding claims, wherein the method (200) further comprises, subsequent to the step of homogenizing (255) the milk (M) by the second homogenizing device (170), filling (265) the UHT milk product (MP) into an aseptic storage and/or aseptic package.

12. A system (100) for producing a UHT milk product (MP), the system (100) comprising:
a first homogenizing device (140), configured to homogenize (230) milk (M) at a first temperature and at a first pressure,
a heating device (150), arranged downstream the first homogenizing device (140), configured to heat (240) the milk (M) to a second temperature, the second temperature being higher than the first temperature, and
a second homogenizing device (170), arranged downstream the heating device (150), configured to homogenize (255) the milk (M) at a third temperature and at a second pressure, the third temperature being lower than the second temperature.

13. The system (100) according to claim 12, wherein the system (100) further comprises a first bactofugation device (110), arranged upstream the first homogenizing device (140).

14. The system (100) according to claim 13, wherein the system (100) further comprises a second bactofugation device (120), arranged upstream the first homogenizing device (140) and arranged in series with the first bactofugation device (110).
